# EUROPÄISCHE PATENTANMELDUNG

(11) **EP 1 416 212 A1**
(43) Veröffentlichungstag der Anmeldung: **06.05.2004**
(21) Anmeldenummer: 03021702.0
(22) Anmeldetag: 25.09.2003
(51) Int. Cl.: F16L 25/00, F16L 21/08

(54) **Vorrichtung zum Verbinden von Aluminium-Profilrohren**

(30) Priorität: 25.10.2002 DE 10250073
(71) Anmelder: Messerschmidt, Friedrich, 72393 Burladingen (DE)
(72) Erfinder: Messerschmidt, Friedrich, 72393 Burladingen (DE)
(74) Vertreter: Möbus, Daniela, Dr.-Ing.

(57) **Zusammenfassung**

Eine Vorrichtung zum Verbinden von Enden von extrudierten Aluminium-Profilrohren (11,51), die jeweils innen bzw. außen den gleichen Querschnitt haben,
mit einem kreiszylindrischen Hohlraum (12),
mit einer kreisförmigen Rohrwand (12),
mit Befestigungsleisten (24,29,32,41), die einstückig in der Rohrwand sind,
die symmetrisch zu zumindest einer Profilrohr-Mittenebene (48) sind, welche Befestigungsleisten (24,29,32,41) Außenflächen (26,28,31,33) haben, die eben sind, senkrecht zur zugehörigen Mittenebene (48) stehen und dem gleichen Querschnitt haben, mit Profilleisten (84,86) an den beiden Randbereichen der Befestigungsleisten (24,29,32,41), die über die Befestigungsleisten in gleicher Weise hinaus stehen, symmetrisch zur Mittenebene (48) sind und Teil einer von außen zugänglichen Kehle (34,36) sind,
die folgende Merkmale aufweist:
a) eine Verbindungsvorrichtung (39,42,68,69) für die Enden der Profilrohre (11,51), welche die Trennebene (49) der Profilrohre (11) überbrückt;
b) diesseits und jenseits der Trennebene (49) Spannbackenvorrichtungen (94,95), die separat gespannt werden können und mit den Profilleisten (84,86) eine formschlüssige Verbindung eingehen;
c) die Spannbackenvorrichtungen (94,95) sind in den Endbereichen einer Brücke (42) befestigt, wobei die Brücke (42) die Trennebene (49) überbrückt.

## Beschreibung

Die Erfindung betrifft eine Vorrichtung gemäß dem Oberbegriff des Anspruchs 1.

Eine Vorrichtung dieser Art ist aus der europäischen Patentanmeldung EP 0 919 758 vom 16. November 1998 bekannt geworden. Die Leitungen sind aus stranggespritztem Aluminium. Sie haben im wesentlichen überall gleichen Querschnitt, nämlich einen Quadrat-Seiten folgenden Umfang und kreiszylindrischen Innenraum.

Die Leitungen haben Endbereiche, die mit einander verbunden werden müssen, denn zum einen darf die Unterbrechung steifigkeitsmäßig wenig bis nichts ausmachen. Zum anderen führen diese Aluminiumprofilrohr-= Gase oder Flüssigkeiten, die einen hohen Betriebsdruck haben können wie z.B. 10 Bar. Die Volumenströme können sehr groß sein und reichen z.B. von 400 L/min bis zu 15.000 L/min. Die Leituneslängen können zwischen 25 Meter und 1.000 Meter betragen. Die Rohrdurchmesser innen reichen von 20 mm bis zu 80 mm.

Die Enden von solchen Aluminium-Profiirohren dürfen sich nicht nur bei Betriebsdruck nicht von einander trennen. Vielmehr können ja während des Betriebs Stoßwellen auftreten, die einen wesentlich höheren Druck haben.

Es muß gewährleistet sein, daß die Enden der Aluminium-Profilrohre sich nicht voneinander trennen, denn sonst kann es geschehen, daß ein Aluminium-Profiirohr mit hoher Geschwindigkeit wie ein Projektil durch den Raum fliegt und Schäden verursacht. Entsprechend der hohen Volumenströme kann dann zusätzlich das Gas oder die Flüssigkeit in den Raum strömen und erhebliche Schäden verursachen.

Es ist nicht notwendig, daß die Verbindungsvorrichtung die Enden der Aluminium-Profilrohre fluiddicht miteinander verbindet. Vielmehr besorgt dies ein spezieller Stopfen, der fluiddicht die Trennebene der Enden überbrückt.

Abgesehen vom Überdruck-Betrieb führen diese Aluminium-Profilrohre auch Unterdrücke. Es kommt auch der Betriebsfall vor, daß Phasen des Überdrucks mit Phasen des Unterdrucks abwechseln.

Ferner darf sich die Verbindungsvorrichtung auch dann nicht lockern, wenn die Leitungen mechanisch und andauernd leicht vibrieren, was zu Lockerungen führen könnte.

Die bisher bekannten Verbindungsvorrichtungen arbeiten nach dem Prinzip des Kraftschlußes, d.h. daß eine Vielzahl von Schrauben angezogen werden und nunmehr Flächen gegeneinander gepreßt werden, die in Folge Reibung sich nicht mehr relativ zueinander in Achsrichtung bewegen können, bzw. nicht bewegen sollten. Für die kleinen 20 mm Profile hat man eine Schwalbenschwanz-Klemmung gewählt. Das Aluminium-Profilrohr hat im Bereich seiner vier Ecken eine jeweils unter 45° stehende Nut, wobei zwei einander entsprechende Nutwände zweier Nuten die eine Schwalbenschwanz-Fläche bilden und ein in achsrichtung geteiltes Verbindungsstück die beiden anderen Schwalbenschwanz-Flächen aufweist.

Nachteilig hieran ist, daß jede Hälfte des Verbindungsstücks in sich starr ist, so daß auch bei noch so starkem Anziehen der vier Schrauben der Reibungs-Kraftschluß statisch unbestimmt bleibt, was bedeutet, daß z.B. das eine Rohr sehr stark geklemmt wird und das andere Rohr wenig oder gar nicht oder nur auf Teilbereichen geklemmt wird. Bekanntlich ist in solchen Fällen ein Anliegen an mehr als drei Bereichen statisch unbestimmt.

Für größere Innenrohrdurchmesser verwendet man im Stand der Technik anders gestaltete Aluminium-Profilrohre, wie dies z.B. aus GB 2242609 A (Fig. 5) hervorgeht.

Hier wird ein ziemlich kompliziertes Aluminium-Profilrohr verwendet. Man arbeitet mit Nutstein-artigen Muttern. Die Verbindung der Rohrenden erfolgt auch hier nach dem Prinzip des Kraftschlusses - also der Reibung.

Komplizierte Aluminium-Extrusions-Mundstücke sind teuer und störanfällig. Außerdem ist Aluminium gewichtsmäßig teuer. Es kann sein, daß die vielfach unnötigen Verästelungen des Aluminium-Profils in den Eckbereichen der Leitungen stören, Schmutz sammeln, oder bei Unachtsamkeit verbogen werden können.

Aufgabe der Erfindung ist es, eine Verbindungsvorrichtung anzugeben, mit der man in der Lage ist, statisch bestimmt mit Hilfe des Formschlußprinzips die Kräfte zuverlässig aufzubringen. Dabei soll dieses Prinzip auch bei sehr unterschiedlichen Rohr-Innendurchmessern praxisfähig verwendbar sein. Schließlich sollen damit auch die Rohrquerschnitte auch bei größeren Innendurchrnessern vereinfacht werden können.

Erfindungsgemäß wird diese Aufgabe durch die aus dem kennzeichnenden Teil des Hauptanspruchs ersichtlichen Merkmale gelöst.

Mit vergleichsweise wenig Aufwand, wenig Spannschrauben und weniger Kräften ist es möglich, daß sich die Zähnungen in Flanschbereiche der Leitungen eingraben. Dadurch erreicht man eine formschlüssige Verbindung und sofern dann zwischen und/oder neben den Zähnungen eine kraftschlüssige Verbindung entsteht, erstreckt sich diese auf ein relativ kurzen Bereich, die ggf. die formschlüssigere Verbindung unterstützt.

Die zwei Paare aus dem Spannbacken-Prismen ergeben, daß sich die Zähnungen an vier unterschiedlichen Stellen der Flansche der Rohre eingraben und damit eine statisch bestimmte Verbindung hergestellt wird. Die Zähnungen können so klein sein, daß sie sich wenig (z.B. weniger als einen halben Millimeter tief) in die Flansche der Leitungen eingraben, was optisch auch nach lösen der Verbindung nicht stört.

Durch die Merkmale des Anspruchs 2 erreicht man, daß man auch die Gegenleistenvorrichtungen wie seither im Strangpress-Verfahren herstellen kann.

Durch die Merkmale des Anspruchs 3 erhält man, die quadratische bis rechteckige Außenkontur der Rohre, so daß man insofern nicht umlernen muß.

Die Erfindung wird nunmehr anhand eines bevorzugten Ausführungsbeispiels erläutert. In der Zeichnung zeigen:
Figur 1 einen Querschnitt durch ein einstückiges, aus Aluminium stranggepreßtes Rohr mit einem Innendurchmesser von 80 mm samt angesetzter Verbindungsvorrichtung,
Figur 2 der Rohrquerschnitt gemäß Figur 1 mit denjenigen Rippen, die - punktiert gezeichnet - weggelassen werden,
Figur 3 die perspektivische Ansicht eines gemäß Figur 1 linken Spannbackenprismas,

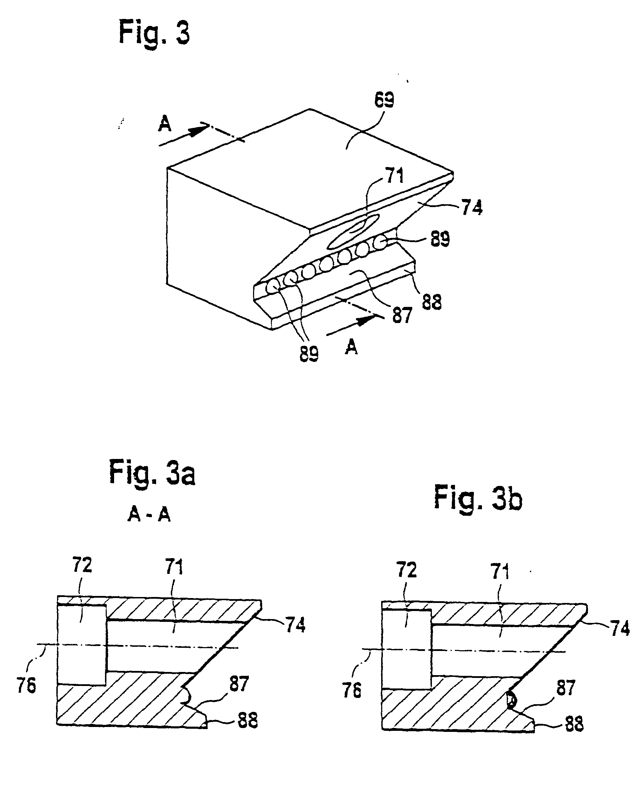

Figur 3 a) einen Schnitt längs der Linie A - A von Figur 3,
Figur 3 b) einen Querschnitt ähnlich Figur 3 a) jedoch mit einer etwas anderen Zähnung,

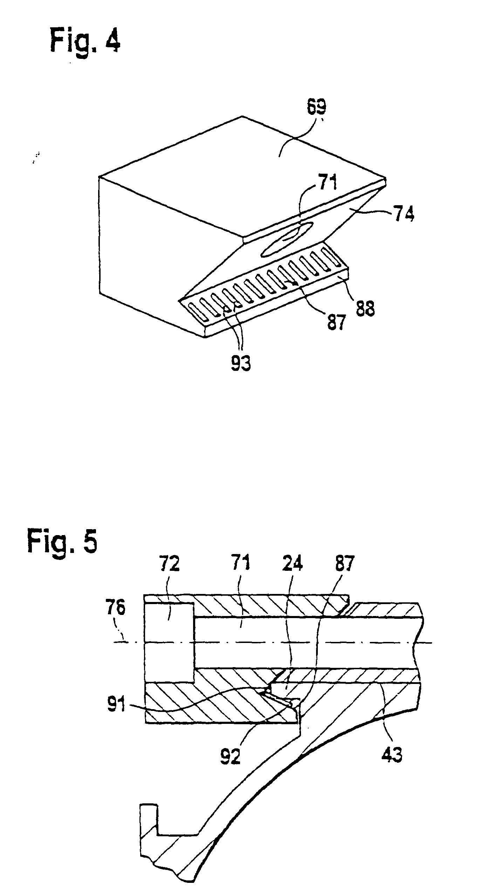

Figur 4 ein Spannbackenprisma ähnlich Figur 3, jedoch mit Zähnungen anderer Art,

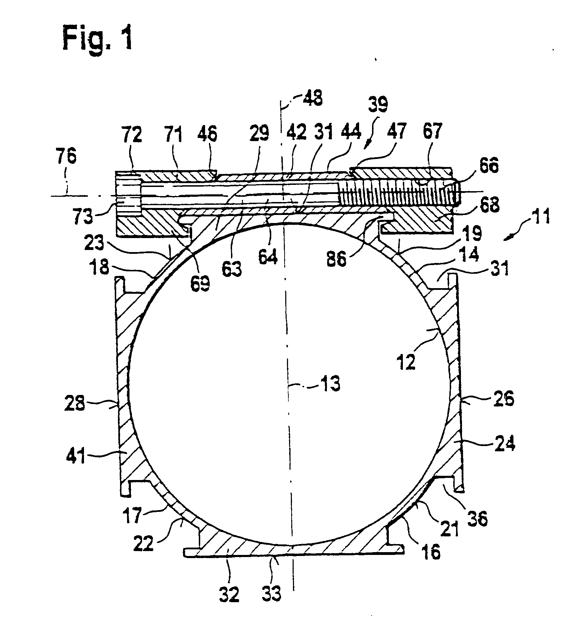

Figur 5 einen Querschnitt gemäß dem Schnitt der Figur 1, jedoch nur deren linker, oberer Eckbereich, mehrfach vergrößert mit der Zähnung von Figur 4, im Zustand des Hineinbeissens von Zähnungen in die Profilleiste,

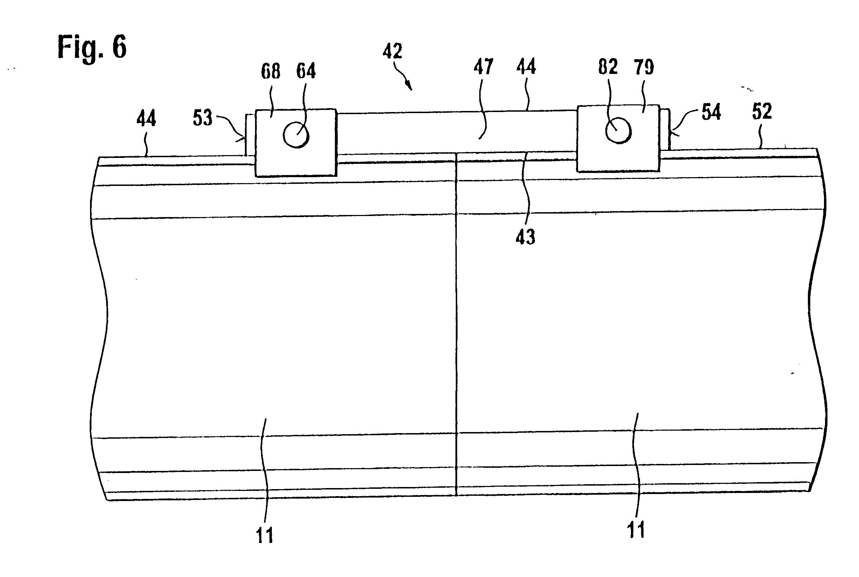

Figur 6 die Seitenansicht zweler Rohrenden, die durch eine rinnungsgemäße Vorrichtung beieinander gehalten werden,

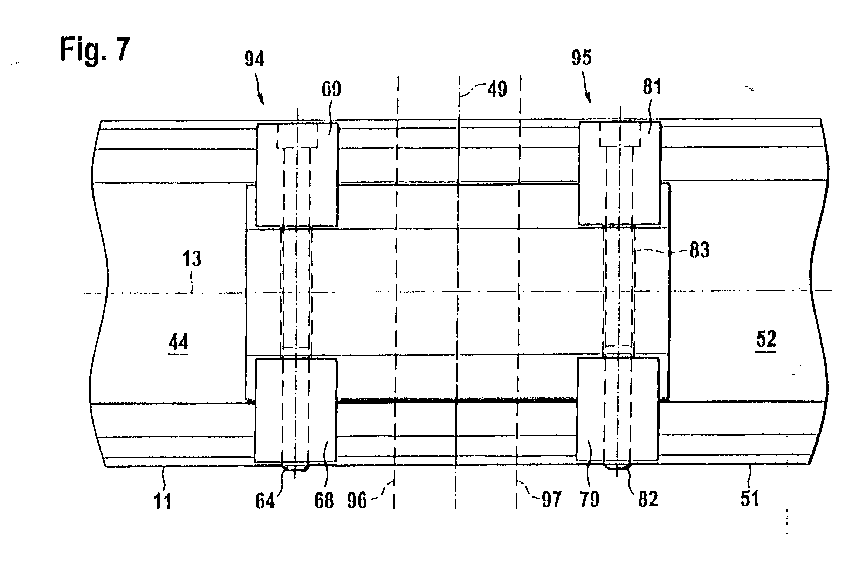

Figur 7 die Draufsicht auf Figur 6, von oben gesehen,

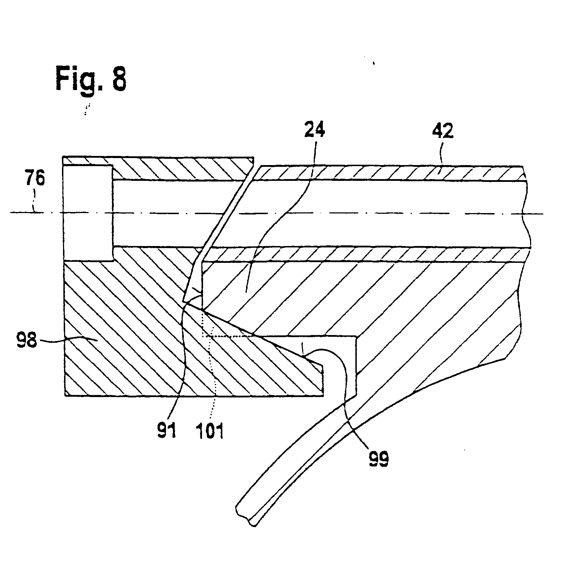

Figur 8 ein Schnitt ähnlich Figur 5, wobei jedoch übertrieben dargestellt - ohne die Verwendung von Zähnungen das Spannbackenprisma die untere äußere Kante der Profiileiste des Rohrs bricht.

Gemäß Figur 1 hat ein stranggepreßtes, aus Aluminium bestehendes Profilrohr 11 eine auf einem Kreiszylinder liegende Innenwand 12 längs einer geometrischen Längsachse 13. Die Längen der Profiirohre können vom Zentimeterbereich bis in Längen von einigen Metern reichen, wobei die meisten Rohrlängen durch die Pritschenlängen von Transportfahrzeugen bestimmt sind. Das Profilrohr 11 hat vier Wandsektoren 14, 16, 17, 18, die im Bereich von zwei Uhr, fünf Uhr, sieben Uhr und zehn Uhr liegen. Die Wandsektoren sind alle gleich lang. Sie haben eine Außenfläche 19, 21, 22, 23, die konzentrisch zu geometrischen Linksachse 13 ist. Die Wandsektoren 14, 15, 17, 18 sind überall gleich dick.

Zwischen dem Wandsektor 14 und dem Wandsektor 16 erstreckt sich nach außen hin eine mit dem Profilrohr 11 einstückige, mit im straggepreßte Profilleiste 24, deren ebene Außenfläche 26 parallel im Abstand zur geometrischen Längsachse 13 verläuft. Parallel hierzu hat das Profilrohr 11 eine im Querschnitt gleiche, jedoch um 180° C versetzte Profilleiste 27, deren Außenfläche 28 parallel zur Außenfläche 26 und damit auch parallel zur geometrischen Längsachse 13 verläuft.

Von der Profiileiste 24 aus gesehen im Gegenuhrzeigersinn um 90°C versetzt, jedoch im Querschnitt identisch hat das Profiirohr 11 eine Profilleiste 29 mit einer Außenfläche 31, die senkrecht zu Außenflächen 26, 28.

Die Profilleiste 32 ist - von der Profilleiste 24 aus gesehen - um 90°C im Uhrzeigersinn versetzt angeordnet und hat gleichen Querschnitt und dem gemäß auch eine Außenfläche 33, die parallel zur Außenfläche 31 und senkrecht zu den Außenflächen 26, 28 ist.

Wenn man das Profilrohr 11 von der gezeichneten Lage aus um Winkel von 90°C oder 180°C in der einen oder anderen Richtung dreht, bleibt die geometrische Konfiguration erhalten.

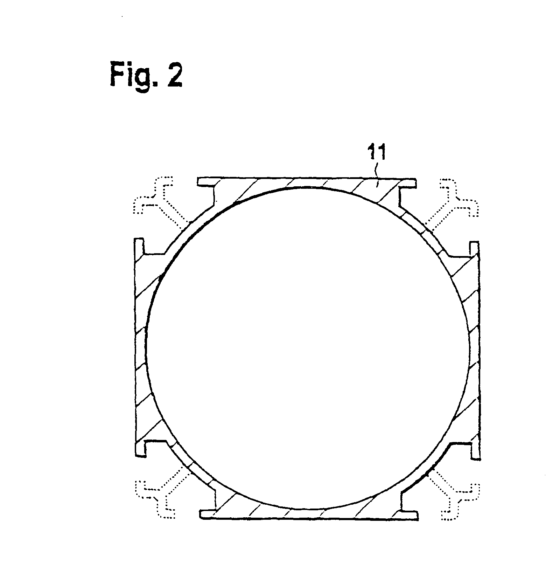

Hinter der Außenfläche 26 befinden sich zu deren beiden Längskanten zwei identische Kehlen 34, 36, die man nicht gesondert herstellen muß, sofern man von dem an sich schon bekannten Profilrohr gemäß Figur 2 ausgeht. Gemäß Figur 1 nach rechts hin werden diese Kehlen 34, 36 durch zwei Spannleisten 37, 38 begrenzt, die genügend belastbar sind, um mit einer später noch zu besprechenden Spannbackenvorrichtung 39 zusammen zu arbeiten. Die Spannleiste 37, 38 hat in ihrem freien Endbereich einen rechtwinklig U-förmige Gestalt. Die Spannleisten 37 und 38 sind gleich.

Die dem Querschnitt nach identische Konfiguration hat auch die Profilleiste 32, die Profilleiste 41 und die Profilleiste 29, so daß eine Spannbackenvorrichtung 39 mit jeder der vier im Querschnitt gleichen Profilleisten 24, 32, 41 und 29 zusammenarbeiten können.

Figur 2 zeigt, daß man lediglich die beim vor bekannten Profiirohr vorhandenen, punktierten Y-Steige weglassen muß, um zum Querschnitt gemäß Figur 1 zu gelangen, dies bedeutet, daß die bekannten Spritzguß-Mundstücke, Berechnungen und Profilrohr-Führungen weiterhin verwendeten können, samt zumindest eines Teil des Zubehörs und daß in sofern kein Umdenken notwendig ist.

Die Spannbackenvorrichtung 39 umfaßt einen Aluminiumblock 42. Seine ebene Unterseite 43 liegt auf der Außenfläche 31 der Profilleiste 29 auf und ist etwa so breit wie diese. Die Oberseite 44 ist eben und parallel zur Unterseite 43. Gemäß Figur 7 ist die Oberseite 44 rechteck-förmig, jedoch in Richtung der geometrischen Längsachse 13 gesehen, schmaler wie die ebenfalls rechteck-förmige Unterseite 43.

Mit je einer gleich breiten und langen, ebenen Schräge 46, 47 geht die Oberseite 44 in die Unterseite 43 über. In der Ansicht von Figur 1 hat damit der Aluminiumblock 42 trapez-förmigen, zu einer geometrischen Mittenebene 48 symetrische Gestalt und Lage. Die geometrische Mittenebene 48 geht durch die geometrische Längsachse 13 und ist parallel zu den Außenflächen 26, 28 und senkrecht zu den Außenflächen 31, 33.

Das Profilrohr 11 endet mit der senkrecht zur Figur 7 stehenden geometrischen Ebene 49, die auch senkrecht zur geometrischen Längsachse 13 ist. Die Fortsetzung der Profilrohr-Leitung geschieht durch ein Profiirohr 51, das den gleichen Querschnitt wie das Profiirohr 11 hat. Die Profilrohre 11 und 51 sind innen durch einen fluiddichten Stopfen abgebildet, der nicht gezeichnet ist. Die geometrische Ebene 49 überbrückt die Spannbackenvorrichtung 39 mittig. Es liegt damit gemäß Figur 4 der Aluminiumblock 42 ebenfalls mittig zur Hälfte auf der Oberseite 44 und zur anderen Hälfte auf der Oberseite 52 des Profilrohrs 51 auf. Er ist etwa so breit wie die Oberseiten 44 und 52 und zwar dort, wo seine Schrägen 46, 47 in seine Unterseite 43 übergehen.

Im gleichen Abstand von seinen Stirnflächen 53, 54 hat er zwei Durchgangsbohrungen 56, 57, die zylindrisch sind und sich daher in Figur 4 in dieser Draufsicht als elliptische Löcher 58, 59, 61, 62 abbilden. Die Schrägen 46, 47 sind ja in sich jeweils eben.

In der Durchgangsbohrung 56 liegt der Schaft 63 einer Schraube 64, die gemäß Figur 1 rechts ein Gewinde 66 trägt, welches in ein Durchgangs-Innengewinde eines Spannbackenprismas 68 hinein geschraubt ist. Das Innengewinde 67 ist koaxial zur Durchgangsbohrung 56. Ein zweites Spannbackenprisma 69 hat ein ebenfalls ko-axiales Durchgangsloch 71, das außen in einem Sitz 72 eines Schraubenkopfs 73 endet. Der Schraubenkopf 73 ist ein Innen-Mehrkant.

Zieht man die Schraube 64 an, so werden die Spannbackenprismen 68, 69 zur geometrischen Mittenebene 84 hingezogen.

Es wird nun das Spannbackenprisma 69 näher erläutert. Dieses ist aus Aluminium. Das Durchgangsloch 71 mündet rechts in einer Gegenschräge 74, die relativ zur geometrischen Schraubenmitten-Achse 76 um den gleichen Winkel geneigt ist, wie die Schräge 46, nämlich 45°C jedoch als Wechselwinkel, so daß sich die Gegenschräge 74 bei Anziehen der Schraube 64 an der Schräge 46 anlegen kann ohne zumindest wesentlich gegenüber der Schraubenmitten-Achse 76 zu kippen. Anders ausgedrückt: beim Anziehen der Schraube 64 bewegt sich das Spannbakkenprisma 69 rein translatorisch zur geometrischen Mittenebene 46 hin.

Die Spannbackenprismen 68, 69 haben eine Gestalt spiegelbildlich zur geometrischen Mittenebene 48 mit dem Unterschied derjenigen Gestaltung, die das Zusammenwirken mit der Schraube 84 bedingt. Würde man andere Anzugsmittel verwenden, dann ist insoweit diesem Unterschied Rechnung zu tragen. Im Ausführungsbeispiel hat das Spannbackenprisma 68 das bereits erwähnte Innengewinde 67. Das Spannbackenprisma 69 hat das Durchgangsloch 71 für den Schaft 63 und dem Sitz 72 für den Schraubenkopf 73, der insoweit im Spannbackeprisma 69 versenkt ist und gemäß Figur 1 nicht nach links hinausragt. Sofern das gemäß Figur 1 rechte Gewindeende der Schraube 64 wenig hinausragt, kann dies erwünscht sein, weil man hieran erkennen kann, daß die Schraube 64 ordnungsgemäß angezogen worden ist.

Der Aluminiumblock 42 überbrückt oder schient die geometrische Ebene 49 je zur Hälfte seiner Länge. In seinem gemäß Figur 4 oberen Endbereich befindet sich die gleiche Anordnung mit zwei Spannbackenprismen 79, 81. Dabei ist der Gestalt nach das Spannbackenprisma 68 gleich dem Spannbackenprisma 79 und das Spannbackenprisma 81. Die Befestigungsweise und Funktionsweise ist die gleiche wie weiter vome beschrieben. Es ist auch entsprechend eine Schraube 82 entsprechend der Schraube 64 vorhanden. Ebenfalls eine Durchgangsbohrung 83 durch den Aluminiumblock 42 sowie das entsprechende Innengewinde im Spannbackenprisma 79 und einem dem Sitz 72 entsprechenden Sitz im Spannbackenprisma 81.

Insofern ist diese Konstruktion zur geometrischen Ebene 49 symmetrisch und braucht daher nicht gesondert erläutert zu werden. Auch der die geometrische Ebene 49 überbrückende Aluminiumblock 42 ist in soweit spiegelbildlich. Auch die geometrische Mittenebene 48 sowie die geometrische Längsachse 13 setzten sich fort.

Der Grundgedanke der Erfindung ist nun, daß beim Anziehen der Schrauben 64, 82 sich Vorrichtungen in die Spannleisten 84, 86 eingraben, so daß eine formschlüssige Verbindung entsteht. Erläutert wird dies nunmehr anhand des Zusammenwirkens der Spannleiste 84 und dem Spannbackenprisma 69.

Die Gegenschräge 74 geht spitzwinkelig in eine ebene Unterschräge 87 über. Diese ist genügend kurz, so daß ihr rechter Randbereich 88 auch bei angezogener Schraube 64 stets einen Abstand von der Profilleiste 29 hat. Im Bereich des Aufeinandertreffens der Gegenschräge 74 und der Unterschräge 87 sind nun Vorsprünge 89 vorgesehen, die beim Anziehen der Schraube 64 auf der letzten Wegstrecke im Bereich eines Millimeters und weniger in die Spannleiste 84 eindringen können und das dortige metallische Material bleibend verformen können. Dies kann auf unterschiedliche Weise geschehen. Zum Beispiel können die Vorsprünge 89 in die Stirnfläche 91 der Spannleiste 84 eindringen.

Es erscheint jedoch besser, die Unterschräge 87 gegen die Unterseite 92 der Spannleiste 84 wirken zu lassen, weil damit die Unterseite 43 des Aluminiumblocks 42 einen Gegenhalt bietet.

Man kann jedoch gemäß Figur 4 und 5 auf der Unterschräge 87 eine Dreieck-Prisma-Zähnung 93 vorsehen, die sich senkrecht zur geometrischen Längsachse 13 erstreckt und die gemäß Figur 5 sowohl in die Unterseite 92 als auch in die Stirnfläche 91 sich hineinbeißt.

Dabei wird Aluminiummaterial der Spannleiste 84 im Eckbereich verdrängt. Diese Mini-Einschnitte sind kaum sichtbar, geschweige denn fühlbar und beeinträchtigen die Verwendbarkeit der Profilrohre 11, 51 nicht. Die Spannbackenvorrichtungen 39 können mehrfach angesetzt werden.

Die Vorsprünge 89, die Zähnungen 93 oder weitere Mittel, die eine plastische Deformation im genannten Bereich der Spannleiste 94 erzeugen, können auch anderer Natur sein, z.B. können entsprechend rauhe oder Schneiden besitzende Einlagen im Bereich der Unterschräge 87 vorgesehen sein. Es kann dieser Bereich auch mit körnigem Material beschichtet sein, das Mikroverzahnungen erzeugt usw.

Je makroskopischer die Vorsprünge 89, Zähnungen 93 usw. sind, um so kleiner ist bevorzugter Maßen ihre Anzahl, da wenige Vorsprünge 89, Zähnungen 93 usw. mit weniger Kraft in die Spannleiste 84 gedrückt werden können.

Sollten - wie in den Figuren gezeichnet - zwei Spannbackenvorrichtungen 94, 95 nicht ausreichen, so verwendet man ein zweites Paar von Spannbackenvorrichtungen, z.B. dort, wo die gestrichelten Linien 96, 97 gezeichnet sind. Für solche Fälle sind dann im Aluminiumblock 42 analog zu den Durchgangsbohrungen im Aluminiumblock 42 jeweils weitere Durchgangslöcher entsprechend dem Durchgangsloch 71 vorzusehen.

Die Spannbackenprismen 68, 79, 81 haben in analoger Weise Gestaltungen, mit denen sie die zugehörige Spannleiste im vorgesehenen Bereich bleibend deformieren können.

Das Ausführungsbeispiel nach Figur 8 wird besonders bevorzugt. Das hier verwendete Spannbackenprisma 98 hat eine Schräge 99, die in sich eben ist, keine Zähnungen oder dergleichen Vorsprünge trägt und spitzwinkliger zur geometrischen Schraubenmittenachse 76 ist, wie die vorher gezeichneten Ausführungsbeispiele. Senkrecht zur Zeichnungsebene von Figur 8 erstreckt sich das Spannbakkenprisma 98 ein relativ kurzes Stück, z.B. 15mm lang. Es entsteht somit beim Anziehen der zugehörigen Schraube eine genügend große Kraft um den linken unteren Eckbereich der Profiileiste 24 bleibend zu deformieren und somit eine formschlüssige Verbindung herzustellen, die vöilig ausreicht, die notwendigen Verbindungskräfte zu garantieren. Der weggedrückte Dreiecksbereich 101 an sich ist als Dreieckbereich im Querschnitt dargestellt. Die Eindrücktiefe kann im Bereich von einigen 10tel Millimeter liegen, wie z.B. 1/10 Millimeter bis 3/10 Millimeter. Einen solchen eingedrückten Bereich sieht man kaum und stellt keine Beeinträchtigung der Profilleiste 24 dar.

Der Winkel, unter dem die Schräge 99 relativ zur geometrischen Schraubenmittenachse 76 steht kann flacher oder steiler wie gezeichnet sein. Wichtig ist lediglich, daß die Schräge 99 einen Dreiecksbereich beim Anziehen der Schraube wegdrückt bzw. wegschabbt. Die nicht dargestellten Seitenflächen des Spannbakkenprismas 98 stehen parallel zur Zeichnungsebene von Figur 8, so daß sich insoweit die gleiche Konfiguration wie in der Figur 4 ergibt, wenn auch dieses Spannbackenprisma breiter gezeichnet ist.

Ein Spannbackenprisma als Rohling läßt sich durch Querschnitte ohne weiteres herstellen. Die Spannbackenprismen 98 sind untereinander gleich mit Ausnahme dessen, daß die einen Spannbackenprisma Innengewinde haben während die anderen Spannbackenprismen die Durchgangsbohrung und den Sitz 72 für die Schraubenköpfe aufweisen.

Figur 8 zeigt das Spannbackenprisma 98 vor dem Augenblick des vollständigen Anziehens der zugehörigen Schraube. Auch im ganz fest gezogenen Zustand berührt das nach rechts vorragende Kinn des Spannbackenprismas 98 das Profilrohr 11 nicht. Beim Wegdrücken des Dreieckbereichs 101 dient auch hier die Unterseite des Aluminiumblocks 42 als Gegenhalt für die auftretenden Kräfte, so daß die Profilleiste 24 nicht nach oben ausweichen kann.

Ggf. kann man das Material der diversen Spannbackenprismen härter wählen, so daß der Dreieckbereich 101 mit weniger Kraft entsteht.

## Patentansprüche

1. Vorrichtung zum Verbinden von Enden von extrudierten Aluminium-Profilrohren, die innen und außen den gleichen Querschnitt haben,
mit einem kreiszylindrischen Hohlraum,
mit einer kreisförmigen Rohrwand,
mit Befestigungsleisten, die einstückig mit der Rohrwand sind,
die symmetrisch zumindest einer Profilrohr-Mittenebene sind, welche Befestigungsleisten Außenflächen haben, die eben sind, senkrecht zur zugehörigen Mittenebene stehen und gleichen Querschnitt haben,
mit Profilleisten an den beiden Randbereiche der Befestigungsleisten, die über die Profiileisten in gleicher Weise hinaus stehen, symmetrisch zur Mittenebene sind und Teil einer von außen zugängigen Kehle sind,
**gekennzeichnet durch** folgende Merkmale:
a) eine Verbindungsvorrichtung (39,42,68,69,79,80,94,95,98) für die Enden der Profilrohre (11, 51), welche die Trennebene (49) der Profilrohre (11, 51) überbrückt.
b) Diesseits und jenseits der Trennebene (49) Spannbackenvorrichtungen (94, 95), die separat gespannt werden können und mit den Profillteisten (24) eine formschlüssige Verbindung eingehen.
c) Die Spannbackenvorrichtungen (94, 95) sind in den Endbereichen einer Brücke (42) befestigt, wobei die Brücke (42) die Trennebene (49) überbrückt.

2. Vorrichtung nach Anspruch 1, **dadurch gekennzeichnet, dass** zwei separate Spannbackenvorrichtungen (94,95) vorgesehen sind, die sich senkrecht zur Mittenebene (13) erstrecken und daß deren Spannbacken-Prismen (68/69) paarweise einander auf kürzest möglicher Entfernung gegenüber liegen.

3. Vorrichtung nach Anspruch 2, **dadurch gekennzeichnet, daß** jedes Spannbacken-Prisma (68,69) jedes Paares eine Querbohrung (71,67) aufweist, die senkrecht zur geometrischen Mittelebene (48) steht, wobei die Querbohrungen (71,67) miteinander fluchten, und daß in den Querbohrungen (71,67) ein anziehbares die Spannbacken-Prismen gegeneinander ziehendes Zugmittel (64,82) liegt.

4. Vorrichtung nach Anspruch 3, **dadurch gekennzeichnet, daß** das Zugmittel (64,82) eine Gewindeschraube (64,82) ist.

5. Vorrichtung nach Anspruch 4, **dadurch gekennzeichnet, daß** die eine Querbohrung ein Innengewinde (67) für die Gewindeschraube (64,82) aufweist.

6. Vorrichtung nach Anspruch 4, **dadurch gekennzeichnet, daß** an die andere Querbohrung ein Durchgangsloch mit Schraubenkopf-Sitz aufweist (71,72).

7. Vorrichtung nach einem oder mehreren der vorhergehenden Ansprüche, **dadurch gekennzeichnet, daß** die Brücke (42) mit seiner Unterseite (43) auf den Profilleisten (44,52) der Profilrohre (11,51) aufliegt, uns zwar beiderseits der Trennebene (49).

8. Vorrichtung nach Anspruch 7, **dadurch gekennzeichnet, daß** die Brücke (42) Durchgangsbohrungen (83) aufweist, die von den Zugmitteln (64,82) durchquert werden.

9. Vorrichtung nach einem oder mehreren der vorhergehenden Ansprüche, **dadurch gekennzeichnet, daß** die Zugmittel (64,82) samt Brücke (42) und Spannbacken-Prismen weder untereinander noch gegenüber den Profürohren in Richtung senkrecht zur geometrischen Mittelebene (48) im gespannten Zustand verkanten.

10. Vorrichtung nach einem oder mehreren der vorhergehenden Ansprüche, **dadurch gekennzeichnet, daß** die Brücke (42) in ihren Randbereichen Trapez-Schrägen (46,47) aufweist, an denen ebene Gegenschrägen (74) der Spannbacken-Prismen anliegen.

11. Vorrichtung nach einem oder mehreren der vorhergehenden Ansprüche, **dadurch gekennzeichnet, daß** die Gegenschrägen (99) in einem vorzugsweise spitzen Winkel zur Wirkungsrichtung der Zugmittel in Verdrängungsflächen (99) übergehen.

12. Vorrichtung nach Anspruch 11, **dadurch gekennzeichnet, daß** die Verdrängungsflächen (99) Material aus der Unterkante der Spannleisten (37,38) bleibend verdrängen.

13. Vorrichtung nach Anspruch 12, **dadurch gekennzeichnet, daß** die Verdrängungsflächen (99) eben sind, oder Mikrozähnungen tragen (93) tragen.

14. Vorrichtung nach einem oder mehreren der vorhergehenden Ansprüche, **dadurch gekennzeichnet, daß** sie in Richtung der geometrischen Längsachse (13) zumindest im festgezogenen Zustand der Spannmittel (64, 82) spiellos ist.

15. Vorrichtung nach Anspruch 2 **dadurch gekennzeichnet, daß** die Spannbacken-Prismen (68, 69) in Richtung der geometrischen Längsachse (13) kurz sind.

16. Vorrichtung nach Anspruch 15, **dadurch gekennzeichnet, daß** die Spannbacken-Prismen wesentlich kürzer wie die Brücke (42) sind.

17. Vorrichtung nach Anspruch 15 und 16 dadurch gegeben, daß die Spannbacken-Prismen in den Endbereich der Brücke (42) vorgesehen sind.
